# EUROPEAN PATENT APPLICATION

(11) **EP 4 804 002 A1**
(43) Date of publication of application: **09.09.2026**
(21) Application number: 24896413.2
(22) Date of filing: 21.11.2024
(51) Int. Cl.: G06F 3/06

(54) **STORAGE SYSTEM, DATA ACCESS METHOD, AND STORAGE SUBSYSTEM**

(30) Priority: 30.11.2023 CN 202311630950
(71) Applicant: Huawei Technologies Co., Ltd., Shenzhen, Guangdong 518129 (CN)
(72) Inventor: YU, Xiliang, Shenzhen, Guangdong 518129 (CN); HE, Jie, Shenzhen, Guangdong 518129 (CN); HUANG, Enzou, Shenzhen, Guangdong 518129 (CN); WU, Bo, Shenzhen, Guangdong 518129 (CN); LI, Jikun, Shenzhen, Guangdong 518129 (CN)
(74) Representative: Epping - Hermann - Fischer
(86) International application number: PCT/CN2024/133636
(87) International publication number: WO 2025/113322

(57) **Abstract**

A storage system, a data access method, and a storage subsystem are provided. In this application, a storage node includes computing circuit logic and a storage medium. The computing circuit logic may receive a first data access request from at least one computing node and/or another storage node in a plurality of storage nodes according to a network protocol. The first data access request is used for accessing data in a first storage node. The computing circuit logic determines a physical address of the to-be-accessed data based on a logical address that is of the data and that is carried in the first data access request, and accesses the storage medium based on the physical address of the data. According to the foregoing storage system, the computing circuit logic has functions of a network interface card, a processor, and a controller in a hard disk drive. This avoids interaction between components inside the storage node through a system bus, improves efficiency of processing the first data access request, and ensures read/write efficiency of the storage node.

## Description

### CROSS-REFERENCE TO RELATED APPLICATIONS

This application claims priority to Chinese Patent Application No. 202311630950.8, filed with the China National Intellectual Property Administration on November 30, 2023 and entitled "STORAGE SYSTEM, DATA ACCESS METHOD, AND STORAGE SUBSYSTEM", which is incorporated herein by reference in its entirety.

### TECHNICAL FIELD

This application relates to the storage field, and in particular, to a storage system, a data access method, and a storage subsystem.

### BACKGROUND

Currently, in a storage system, the storage system includes a computing node that undertakes a computing function and a storage node that undertakes a storage function. The computing node can receive a data access request from the outside, to access data in the storage system. The storage node reads data from the storage node or writes data into the storage node based on the data access request.

When the computing node needs to read data from the storage node or write data into the storage node, the computing node sends a data read request or a data write request to the storage node. The storage node processes the data read request to complete data reading, and processes the data write request to complete data writing. For the storage node, an entire process of processing the data read request or the data write request requires participation of components (such as a network interface card, a processor, a memory, and a hard disk drive) inside the storage node. In the processing process, interaction between the components inside the storage node (for example, interaction between the network interface card and the processor, and interaction between the processor and the hard disk drive and the memory) is inevitably required. More components participating in the interaction indicates a longer interaction delay. An excessively long delay affects data read/write efficiency of the storage node.

### SUMMARY

Embodiments of this application provide a storage system, a data access method, and a storage subsystem, to improve data read/write efficiency of a storage node in the storage system.

According to a first aspect, an embodiment of this application provides a storage system. The storage system includes at least one computing node and a plurality of storage nodes, and for a first storage node in the plurality of storage nodes, the first storage node includes computing circuit logic and a storage medium. The first storage node herein represents any one of the plurality of storage nodes. Herein, only for ease of distinguishing between different storage nodes in the plurality of storage nodes, the first storage node, a second storage node, and a third storage node (where the third storage node is described below) indicate different storage nodes in the plurality of storage nodes. In this embodiment of this application, a storage node A, a storage node B, and a storage node C may alternatively indicate different storage nodes in the plurality of storage nodes.

The computing circuit logic in the first storage node is a core processing unit in the first storage node, and the computing circuit logic is circuit logic having a composite function or a computer chip having a plurality of functions. The computing circuit logic may receive a first data access request from the at least one computing node and/or the second storage node in the plurality of storage nodes according to a network protocol, where the first data access request is used for accessing data in the first storage node.

After receiving the first data access request, the computing circuit logic determines a physical address of the to-be-accessed data based on a logical address that is of the data and that is carried in the first data access request, and accesses the storage medium based on the physical address of the data.

According to the foregoing storage system, the computing circuit logic has functions of a network interface card (which can interact with the computing node and the second storage node according to the network protocol), a processor (which can parse the first data access request), and a controller in a hard disk drive (which can implement translation between the physical address and the logical address, and access the storage medium based on the physical address). This avoids interaction between components inside the storage node through a system bus, improves efficiency of processing the first data access request, and ensures read/write efficiency of the storage node.

In a possible implementation, the computing circuit logic includes a front-end protocol unit, a computing unit, a storage unit, and a media management unit, and the front-end protocol unit, the computing unit, the storage unit, and the media management unit communicate with each other according to an on-chip bus protocol. In other words, the front-end protocol unit, the computing unit, the storage unit, and the media management unit are connected through an on-chip bus. The on-chip bus is a connection line used for interconnection in a chip, and is different from the system bus. A bandwidth of the on-chip bus may be designed based on an actual requirement, and a connection mode is more flexible. In the computing circuit logic, the front-end protocol unit receives the first data access request according to the network protocol; the storage unit determines the physical address of the data based on the logical address of the data; the computing unit obtains the physical address of the data from the storage unit, and indicates the media management unit to access the storage medium based on the physical address of the data; and the media management unit accesses the storage medium based on the physical address of the data and based on an indication of the computing unit.

According to the foregoing storage system, the computing circuit logic internally includes units having different functions. The units interact with each other according to the on-chip bus protocol, and an interaction manner is more efficient. This can effectively improve the efficiency of processing the first data access request, and implement quick access to the data in the storage medium.

In a possible implementation, when the first data access request is used for requesting to write the data into the storage medium, that is, when the first data access request is a data write request (for example, a first data write request or a second data write request mentioned in embodiments of this application), the front-end protocol unit receives the first data access request according to the network protocol; the computing unit generates parity data of the data; and the storage unit determines the physical address of the data based on the logical address of the data, and allocates a physical address to the parity data. Usually, there is an association relationship between the physical address of the data and the physical address of the parity data and the logical address of the data. After the logical address of the data is determined, the physical address of the data and the physical address of the parity data may be determined based on the association relationship.

The computing unit obtains the physical address of the data and the physical address of the parity data from the storage unit, and indicates the media management unit to write the data and the parity data based on the physical address of the data and the physical address of the parity data. The media management unit writes the data into the storage medium based on the physical address of the data and based on an indication of the computing unit, and writes the parity data into the storage medium based on the physical address of the parity data.

According to the foregoing storage system, when the first data access request is the data write request, in the computing circuit logic of the first storage node, in addition to writing the data into the storage medium, units can cooperate to further write the parity data of the data into the storage medium. In other words, it is ensured that the first storage node can store the data by using an erasure coding (erasure coding, EC) check mechanism or a redundant array of independent disks (redundant array of independent disks, RAID) (for example, RAID 3 or RAID 5).

In a possible implementation, the first data access request is used for requesting to write the data into the storage medium. The front-end protocol unit receives the first data access request according to the network protocol; the computing unit generates a data copy of the data; and the storage unit determines a logical address of the data copy based on the logical address of the data, where the logical address of the data copy is in a third storage node in the plurality of storage nodes. Usually, there is an association relationship between the physical address of the data and the logical address of the data copy and the logical address of the data. After the logical address of the data is determined, the physical address of the data and the logical address of the data copy may be determined based on the association relationship.

The computing unit obtains the logical address of the data copy from the storage unit, and generates a second data access request, where the second data access request is used for writing the data copy into the third storage node, and the second data access request carries the logical address of the data copy. The front-end protocol unit sends the second data access request to the third storage node. The computing unit obtains the physical address of the data from the storage unit, and indicates the media management unit to write the data based on the physical address of the data. The media management unit writes the data into the storage medium based on the physical address of the data and based on an indication of the computing unit.

According to the foregoing storage system, when the first data access request is the data write request, in the first storage node, in addition to writing the data into the storage medium, units can cooperate to further write the data copy of the data into another storage node (for example, the third storage node). In other words, it is ensured that the first storage node can store the data by using a multi-copy mechanism or a RAID mechanism (for example, RAID 1).

In a possible implementation, the first data access request is used for requesting to write the data into the storage medium. The front-end protocol unit receives the first data access request according to the network protocol; the computing unit generates the data copy of the data; and the storage unit determines the physical address of the data and a physical address of the data copy based on the logical address of the data. Usually, there is an association relationship between the physical address of the data and the physical address of the data copy and the logical address of the data. After the logical address of the data is determined, the physical address of the data and the physical address of the data copy may be determined based on the association relationship.

The computing unit obtains the physical address of the data and the physical address of the data copy from the storage unit, and indicates the media management unit to store the data and the data copy based on the physical address of the data and the physical address of the data copy. The media management unit stores the data based on the physical address of the data and based on an indication of the computing unit, and stores the data copy in the storage medium based on the physical address of the data copy.

In the foregoing descriptions, an example in which the data copy is stored in the another storage node or the first storage node is used for description. Actually, a quantity of data copies and a specific storage location of any data copy are not limited in embodiments of this application. There may be one or more data copies. For any data copy, the data copy may alternatively be stored in any one of the plurality of storage nodes, or may be stored in the plurality of storage nodes in a distributed manner.

According to the foregoing storage system, when the first data access request is the data write request, in the computing circuit logic of the first storage node, in addition to writing the data into the storage medium, units can cooperate to further write the data copy of the data into a local storage medium. In other words, it is ensured that the first storage node can store the data by using the multi-copy mechanism or the RAID mechanism (for example, RAID 1).

In a possible implementation, when the first data access request is used for requesting to read the data from the storage medium, that is, when the first data access request is a data read request (for example, a first data read request or a second data read request mentioned in embodiments of this application), the front-end protocol unit receives the first data access request according to the network protocol; and the storage unit determines the physical address of the data and the physical address of the parity data based on the logical address of the data.

The computing unit obtains the physical address of the data and the physical address of the parity data from the storage unit, and indicates the media management unit to read the data and the parity data based on the physical address of the data and the physical address of the parity data. The media management unit reads the data and the parity data of the data from the storage medium based on the physical address of the data and the physical address of the parity data. The computing unit performs data restoration on the data based on the parity data of the data, and generates a first data access response, where the first data access response carries data obtained through the data restoration. The data restoration performed by the computing unit on the data includes data check and/or data error correction, where the data check is used for detecting whether an error occurs in the data, and the data error correction is used for correcting an error part in the data after it is determined that the error occurs in the data. Corrected data or data that is determined to have no error through the data check is the data obtained through the data restoration.

The front-end protocol unit sends the first data access response to the at least one computing node and/or the second storage node.

According to the foregoing storage system, when the first data access request is the data read request, the units in the first storage node can cooperate to perform data restoration on the data in cooperation, to ensure accuracy of the read data.

In a possible implementation, the first data access request is used for requesting to read the data from the storage medium. The media management unit reads the data based on the physical address of the data and based on an indication of the computing unit. If an error occurs in the read data, for example, error correction fails to be performed on the data, the data has garbled characters, or another case occurs, the computing unit may obtain the data copy. For example, after determining that the media management unit fails to read the data from the storage medium, the computing unit obtains the logical address of the data copy from the storage unit, and generates a third data access request, where the third data access request is used for reading the data copy from the third storage node in the plurality of storage nodes, and the third data access request carries the logical address of the data copy.

The front-end protocol unit sends the third data access request to the third storage node, and receives the data copy fed back by the third storage node.

The computing unit restores locally stored data by using the data copy, and generates the first data access response, where the first data access response carries the data copy. A manner in which the computing unit restores the locally stored data by using the data copy is not limited in embodiments of this application. For example, the computing unit may indicate the media management unit to write the data copy into the physical address of the data again. For another example, the computing unit may indicate the storage unit to reallocate a physical address to the data, and indicate the media management unit to write the data copy into the physical address that is reallocated to the data. Certainly, the computing unit may not restore the locally stored data. Instead, when subsequently receiving a data access request for requesting to read the data, the computing unit directly initiates the third data access request to the third storage node through the front-end protocol unit.

The front-end protocol unit sends the first data access response to the at least one computing node and/or the second storage node.

According to the foregoing storage system, in the first storage node, when an error occurs in the data stored in the local storage medium, the computing circuit logic may obtain the data copy and feed back the data copy to the computing node or the second storage node, to ensure that correct data can be fed back.

In a possible implementation, the first data access request is used for requesting to read the data from the storage medium. The media management unit reads the data based on the physical address of the data and based on an indication of the computing unit. If an error occurs in the read data, for example, error correction fails to be performed on the data, the data has garbled characters, or another case occurs, the computing unit may obtain the data copy. For example, after determining that the media management unit fails to read the data from the storage medium, the computing unit obtains the physical address of the data copy from the storage unit, and the computing unit indicates the media management unit to read the data copy based on the physical address of the data copy. The media management unit reads the data copy from the storage medium based on the physical address of the data copy and based on an indication of the computing unit.

The computing unit restores locally stored data by using the data copy, and generates the first data access response, where the first data access response carries the data copy. A manner in which the computing unit restores the locally stored data by using the data copy is not limited in embodiments of this application. For details, refer to the foregoing descriptions. Details are not described herein again. Certainly, the computing unit may not restore the locally stored data. Instead, when subsequently receiving a data access request for requesting to read the data, the computing unit directly obtains the physical address of the data copy from the storage unit, and indicates the media management unit to read the data copy from the storage medium based on the physical address of the data copy.

In a possible implementation, the first storage node may further assist the computing node in performing some data computing operations. The computing circuit logic receives a data computing request from the at least one computing node according to the network protocol. The data computing request is used for computing the data in the storage node, reading the data in the storage medium based on the data computing request, and computing the read data.

Specifically, inside the computing circuit logic, the front-end protocol unit receives the data computing request according to the network protocol; the storage unit determines a physical address of the to-be-computed data based on a logical address that is of the to-be-computed data and that is carried in the data computing request; the computing unit obtains the physical address of the to-be-computed data from the storage unit, and indicates the media management unit to read the to-be-computed data based on the physical address of the data; the media management unit reads the to-be-computed data from the storage medium based on the physical address of the to-be-computed data and based on an indication of the computing unit; and the computing unit performs data computing on the to-be-computed data based on computing indication information carried in the data computing request, to obtain a computing result, and generates a data computing response carrying the computing result, where the computing indication information indicates a computing manner of the to-be-computed data. The front-end protocol unit feeds back the data computing response to the computing node.

According to the foregoing storage system, the computing circuit logic further has a data computing function, and can assist the computing node in completing some data computing tasks, to reduce data computing pressure of the computing node.

In a possible implementation, the on-chip bus protocol includes but is not limited to ARM CCI, an ARM CCN, an ARM CMN, and ARM NIC.

In a possible implementation, the storage medium is a flash chip or a magnetic disk. The storage medium has only a data storage function.

In a possible implementation, the network protocol includes a part or all of the following: a transmission control protocol/internet protocol (TCP/IP), a user datagram protocol (UDP), a hypertext transfer protocol (HTTP), a file transfer protocol (FTP), a remote terminal Telnet protocol, and a network file system (network file system, NFS) protocol. The foregoing network protocol is merely an example. A network protocol based on which the computing circuit logic in the storage node communicates with another node in the storage system is not limited in embodiments of this application.

According to the foregoing storage system, interaction may be performed between a computing node and a storage node, and between storage nodes according to different network protocols. This is applicable to different application scenarios.

According to a second aspect, an embodiment of this application provides a data access method. The method may be performed by the first storage node in the foregoing storage system. For beneficial effects, refer to the related descriptions of the first aspect. Details are not described herein again. In the method, at least one computing node and/or a second storage node in a plurality of storage nodes send/sends a first data access request to the first storage node in the plurality of storage nodes, where the first data access request is used for accessing data in the first storage node.

Computing circuit logic in the first storage node receives the first data access request according to a network protocol, determines a physical address of the to-be-accessed data based on a logical address that is of the data and that is carried in the first data access request, and accesses a storage medium of the first storage node based on the physical address of the data.

In a possible implementation, the computing circuit logic includes a front-end protocol unit, a computing unit, a storage unit, and a media management unit, and the front-end protocol unit, the computing unit, the storage unit, and the media management unit communicate with each other according to an on-chip bus protocol. When the computing circuit logic accesses the storage medium of the first storage node based on the first data access request, inside the computing circuit logic, the front-end protocol unit receives the first data access request according to the network protocol; the storage unit determines the physical address of the data based on the logical address of the data; the computing unit obtains the physical address of the data from the storage unit, and indicates the media management unit to access the storage medium based on the physical address of the data; and the media management unit accesses the storage medium based on the physical address of the data and based on an indication of the computing unit.

In a possible implementation, the first data access request is used for requesting to write the data into the storage medium. The computing circuit logic determines the physical address of the to-be-accessed data based on the logical address that is of the data and that is carried in the first data access request, and when the storage medium of the first storage node is accessed based on the physical address of the data, the computing unit generates parity data of the data based on the data. The storage unit determines the physical address of the data based on the logical address of the data, and allocates a physical address to the parity data of the data. The computing unit obtains the physical address of the data and the physical address of the parity data from the storage unit, and indicates the media management unit to store the data and the parity data based on the physical address of the data and the physical address of the parity data. The media management unit stores the data based on the physical address of the data and based on an indication of the computing unit, and stores the parity data of the data in the storage medium based on the physical address of the parity data.

In a possible implementation, the first data access request is used for requesting to write the data into the storage medium. The computing circuit logic determines the physical address of the to-be-accessed data based on the logical address that is of the data and that is carried in the first data access request, and when the storage medium of the first storage node is accessed based on the physical address of the data, the computing unit generates a data copy based on the data. The storage unit determines the physical address of the data based on the logical address of the data, and allocates a logical address to the data copy of the data. The computing unit obtains the physical address of the data and a physical address of the data copy from the storage unit, and indicates the media management unit to store the data based on the physical address of the data. The computing unit generates a second data access request, where the second data access request is used for requesting to write the data copy into a third storage node, and the second data access request carries the logical address of the data copy. The front-end protocol unit sends the second data access request to the third storage node. The media management unit stores the data based on the physical address of the data and based on an indication of the computing unit.

In a possible implementation, the first data access request is used for requesting to write the data into the storage medium. The computing circuit logic determines the physical address of the to-be-accessed data based on the logical address that is of the data and that is carried in the first data access request, and when the storage medium of the first storage node is accessed based on the physical address of the data, the computing unit generates a data copy based on the data. The storage unit determines the physical address of the data and a physical address of the data copy based on the logical address of the data.

The computing unit obtains the physical address of the data and the physical address of the data copy from the storage unit, and indicates the media management unit to store the data and the data copy based on the physical address of the data and the physical address of the data copy.

The media management unit stores the data based on the physical address of the data and based on an indication of the computing unit, and stores the data copy in the storage medium based on the physical address of the data copy.

In a possible implementation, the first data access request is used for requesting to read the data from the storage medium. The computing circuit logic determines the physical address of the to-be-accessed data based on the logical address that is of the data and that is carried in the first data access request, and when the storage medium of the first storage node is accessed based on the physical address of the data, the computing unit obtains the physical address of the data and a physical address of parity data from the storage unit, and indicates the media management unit to read the data and the parity data based on the physical address of the data and the physical address of the parity data.

The media management unit reads the data and the parity data of the data from the storage medium based on the physical address of the data and the physical address of the parity data.

The computing unit performs data restoration on the data based on the parity data of the data, and generates a first data access response, where the first data access response carries data obtained through the data restoration.

The front-end protocol unit sends the first data access response to the at least one computing node and/or the second storage node.

In a possible implementation, the first data access request is used for requesting to read the data from the storage medium. After determining that the media management unit fails to read the data from the storage medium, the computing unit obtains a logical address of the data copy from the storage unit, and generates a third data access request, where the third data access request is used for reading the data copy from a third storage node in the plurality of storage nodes, and the third data access request carries the logical address of the data copy.

The front-end protocol unit sends the third data access request to another storage node, and receives the data copy fed back by the third storage node.

The computing unit generates a first data access response, where the first data access response carries the data copy. The front-end protocol unit sends the first data access response to the at least one computing node and/or the second storage node.

In a possible implementation, the computing circuit logic receives a data computing request from the at least one computing node according to the network protocol. The data computing request is used for computing the data in the storage node, reading the data in the storage medium based on the data computing request, and computing the read data.

In a possible implementation, the on-chip bus protocol includes but is not limited to ARM CCI, an ARM CCN, an ARM CMN, and ARM NIC.

In a possible implementation, the storage medium is a flash chip or a magnetic disk.

In a possible implementation, the network protocol includes a part or all of the following: a TCP/IP, a UDP, an HTTP, an FTP, a Telnet protocol, and an NFS protocol.

According to a third aspect, an embodiment of this application further provides a storage node. A storage node apparatus has a function of implementing behavior of the first storage node in the example of the first aspect. For beneficial effects, refer to the descriptions of the first aspect. Details are not described herein again. The function may be implemented by hardware, or may be implemented by executing corresponding software by hardware. The hardware or the software includes one or more modules corresponding to the foregoing functions. In a possible design, a structure of the storage node includes a front-end protocol unit, a computing unit, a storage unit, and a media management unit. The units may perform corresponding functions in the method example in the first aspect. For beneficial effects, refer to the related descriptions of the first aspect. Details are not described herein again. When the front-end protocol unit, the computing unit, the storage unit, and the media management unit are hardware, the units are integrated into computing circuit logic or a computer chip. When the front-end protocol unit, the computing unit, the storage unit, and the media management unit are software, the units are stored in the computing circuit logic, a cache in the computer chip, or a memory connected to the computing circuit logic or the computer chip, and the computing circuit logic or the computer chip may invoke the front-end protocol unit, the computing unit, the storage unit, and the media management unit, the function of implementing the behavior of the first storage node.

According to a fourth aspect, this application further provides a storage subsystem. The storage subsystem includes computing circuit logic and a storage medium, and optionally further includes a memory. The storage subsystem performs the method according to any one of the second aspect or the possible implementations of the second aspect. The computing circuit logic may invoke computer program instructions burnt into the computing circuit logic to perform the method according to any one of the second aspect or the possible implementations of the second aspect. The memory may also store computer program instructions and data that are necessary in a data access process. The computing circuit logic invokes the computer program instructions stored in the memory to perform the method according to any one of the second aspect or the possible implementations of the second aspect. The computing circuit logic may alternatively invoke computer program instructions that are necessary in a data access process and that is stored in another storage, to perform the method according to any one of the second aspect or the possible implementations of the second aspect.

According to a fifth aspect, this application provides a computer-readable storage medium. When the computer-readable storage medium is executed by a computing device, the computing device performs the method according to any one of the second aspect or the possible implementations of the second aspect. The computer-readable storage medium stores a program. The storage medium includes but is not limited to a volatile memory, for example, a random access memory, and a non-volatile memory, for example, a flash memory, a hard disk drive (hard disk drive, HDD), or a solid state drive (solid state drive, SSD).

According to a sixth aspect, this application provides a computing device program product. The computing device program product includes computer instructions. When the computer instructions are executed by a computing device, the computing device performs the method according to any one of the second aspect or the possible implementations of the second aspect. A computer program product may be a software installation package. When the method according to any one of the second aspect or the possible implementations of the second aspect needs to be used, the computer program product may be downloaded and the computer program product may be executed on the computing device. According to a seventh aspect, this application further provides a computer chip. The chip is connected to a storage, and the chip is configured to read and execute a software program stored in the storage, to perform the method in the second aspect and the possible implementations of the second aspect.

### BRIEF DESCRIPTION OF DRAWINGS

FIG. 1 is a diagram of a structure of a storage system according to an embodiment of this application;
FIG. 2 is a diagram of a structure of a storage node according to an embodiment of this application;
FIG. 3 is a diagram of a structure of another storage system according to an embodiment of this application; and
FIG. 4 is a diagram of a data access method according to an embodiment of this application.

### DESCRIPTION OF EMBODIMENTS

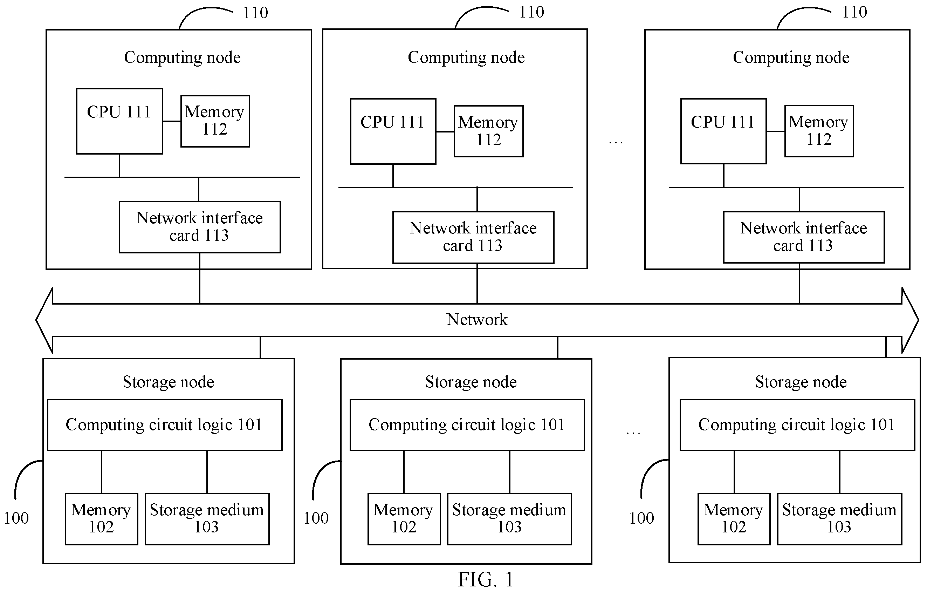

FIG. 1 shows a storage system according to an embodiment of this application. The storage system includes a computing node cluster and a storage node cluster.

In the storage system, the computing node cluster undertakes a computing function in the storage system, and the computing node cluster may undertake most computing or processing tasks for data in the storage system. For example, the computing node cluster may process an access request generated outside the storage system, access the storage system based on the access request, and read data from or write data into the storage system. For another example, the computing node cluster can further perform data computing, metadata management, and storage service initiation or management.

The computing node cluster includes one or more computing nodes 110 (where FIG. 1 shows two computing nodes 110, but is not limited to two computing nodes 110), and the computing nodes 110 may communicate with each other. The computing node 110 is a computing device, for example, a server, a desktop computer, or a controller of a storage array. A specific structure of the computing node is not limited in embodiments of this application. Any computing device that can implement the computing function is applicable to embodiments of this application.

FIG. 1 shows only an example of a diagram of a structure of the computing node. As shown in FIG. 1, the computing node 110 includes at least a processor 111, a memory 112, and a network interface card 113. The processor 111 is a central processing unit (central processing unit, CPU), and is configured to process an access request or a request generated inside the computing node 110. For example, when receiving an access request for requesting to write data, the processor 111 temporarily stores, in the memory 112, the data in the access request. When a total amount of data in the memory 112 reaches a specific threshold, the processor 111 sends the data stored in the memory 112 to the storage node cluster by sending a data access request to the storage node cluster (a storage node in the storage node cluster), to request the storage node cluster to perform persistent storage. When receiving an access request for requesting to read data, the processor 111 sends the data access request to the storage node cluster, to request to read the data from the storage node cluster.

In addition, the processor 111 is further configured to compute or process data, for example, perform data search, data counting, metadata management, data deduplication, data compression, or storage space virtualization on the data. Alternatively, the processor 111 may hand over an operation of data computing to the storage node in the storage node cluster for execution. For example, the processor 111 may send a data computing request to the storage node cluster, to request the storage node cluster to perform data computing.

The memory 112 may be a random access memory, or may be a read-only memory (read-only memory, ROM). The random access memory may be a dynamic random access memory (DRAM) or a storage class memory (SCM). The memory 112 may further include another random access memory, for example, a static random access memory (SRAM). The memory 112 may further include a read-only memory, for example, a programmable read-only memory (PROM) or an erasable programmable read-only memory (EPROM). The memory 112 may alternatively be a dual in-line memory module or a dual in-line memory module (DIMM), or the memory 112 may be a solid state disk (SSD). The network interface card 113 is configured to communicate with the storage node 100 in the storage node cluster. For example, when the total amount of data in the memory 112 reaches the specific threshold, the computing node 110 may send the data access request (for example, a first data write request mentioned in embodiments of this application) to the storage node 100 through the network interface card 113, to persistently store the data. For another example, the computing node 110 may send a data read request (for example, a first data read request mentioned in embodiments of this application) to the storage node 100 through the network interface card 113, to read the data from the storage node 100. In addition, the computing node 110 may further include a bus configured for communication between components inside the computing node 110.

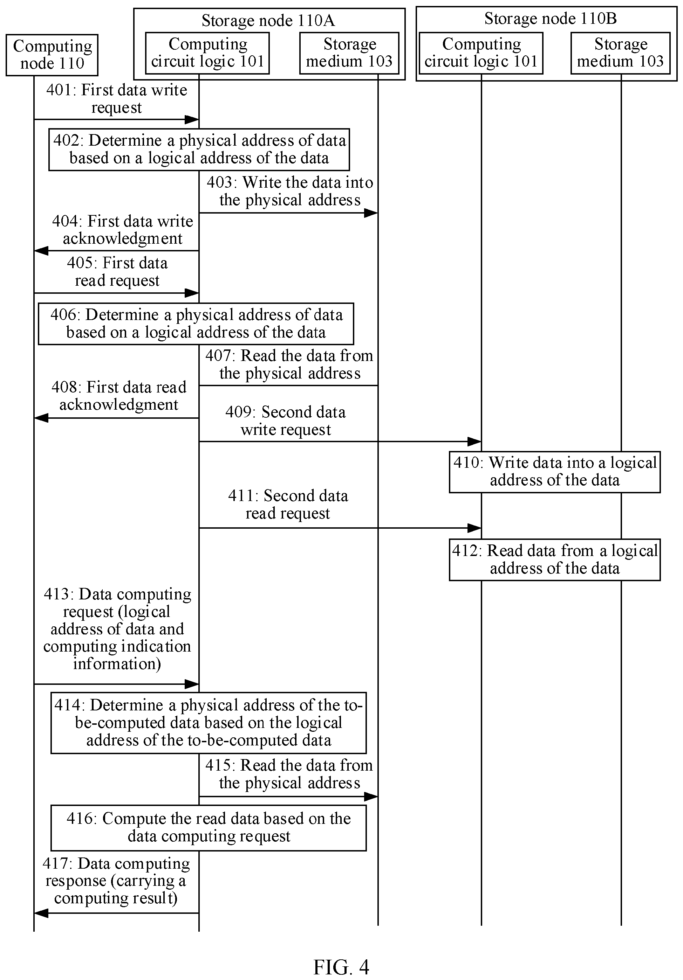

The storage node cluster undertakes a storage function in the storage system. Most data stored in the storage system is stored in the storage node cluster (where a small part of data is temporarily stored in the computing node 110). The storage node cluster includes a plurality of storage nodes 100 (where FIG. 4 shows three storage nodes 100, but is not limited to three storage nodes 100).

For any storage node 100 in the storage node cluster, the storage node 100 can receive a data access request (for example, the first data write request, the first data read request, a second data write request, or a second data read request mentioned in embodiments of this application) of a node (for example, the computing node 110 or a storage node 100 other than the storage node 100) other than the storage node 100, process the data access request, convert, into a physical address, a logical address that is of data and that is carried in the data access request, access a storage medium 103 of the storage node based on the physical address, and write the data into or read the data from the storage medium 103. For example, when the data access request (for example, the first data write request or the second data write request mentioned in embodiments of this application) is used for requesting to write the data, the storage node 100 may write the data into the storage medium 103 based on the data access request. For another example, when the data access request is used for requesting to read the data, the storage node 100 may read the data from the storage medium 103 based on the data access request.

In this embodiment of this application, the storage node 100 may write the data into or read the data from the storage medium 103 based on a request (for example, the first data write request or the first data read request mentioned in embodiments of this application) of the computing node 110. The storage nodes 100 may interact with each other. The storage node 100 may write or read the data based on a request (the second data write request or the second data read request mentioned in embodiments of this application) of another storage node 100 in the storage node cluster. The storage node 100 may further actively initiate a data access request to the another storage node 100 in the storage node cluster, to request to write the data into or read the data from the another storage node 100.

The storage node 100 can further receive a data computing request initiated by the computing node 110, and complete data computing based on the data computing request. In addition, the storage node 100 can further support storage services such as data deduplication, data compression, and data restoration. The storage node 100 may independently complete the storage services such as the data deduplication, the data compression, and the data restoration, or may complete the storage services such as the data deduplication, the data compression, and the data restoration based on the request of the computing node 110.

In terms of hardware, for any storage node 100, the storage node 100 includes computing circuit logic 101 and a storage medium 102. Optionally, the storage node 100 further includes a memory 102. Optionally, the computing circuit logic 101 may further include some caches, for example, an SRAM, to support running of the computer circuit logic.

The computing circuit logic 101 is a core component that has a processing function inside the storage node 100. The computing circuit logic 101 is a component that supports various functions of the storage node 100. In other words, inside the storage node 100, an operation performed by the storage node 100 is completed by the computing circuit logic 101. For example, the computing circuit logic 101 can directly receive and process a data access request, and access the storage medium 103 based on the data access request. For another example, the computing circuit logic 101 can generate parity data of data when writing the data into the storage medium 103, and write the data and the parity data of the data into the storage medium 103.

The computing circuit logic 101 further supports deployment of a standard operating system (OS) on the storage node, to support running and management of the storage services, and maintenance of processing of normal transactions such as metadata management, status management, and exception handling of the storage node.

The memory 102 is configured to: temporarily store the data to be written into the storage medium 103, or read, from the storage medium 103, the data to be sent to the computing node 110. For a type of the memory 102, refer to the foregoing descriptions of the memory 113. Details are not described herein again.

The storage medium 103 is a medium that is in the storage node 100 and that is configured to persistently store the data. The storage medium 103 may be a flash memory (NAND flash), or may be a magnetic disk. In this embodiment of this application, the storage medium 103 has only a storage function and does not have a computing function, and the storage medium 103 stores the data or outputs the data only under control of the computing circuit logic 101.

It can be learned that in the storage node 100, the computing circuit logic 101 is a processing core of the storage node 100. The following describes functions of the computing circuit logic 101.

### Function 1: Communication function

In the storage node 100, the computing circuit logic 101 can interact with the computing node 110 or the another storage node 100, receive a data access request from the computing node 110, or feed back a data access response to the computing node 110 or the another storage node 100. The computing circuit logic 101 may interact with the computing node 110 according to a network protocol, where the network protocol includes but is not limited to a TCP/IP protocol, a UDP protocol, an HTTP protocol, an FTP protocol, a Telnet protocol, a simple mail transfer protocol (simple mail transfer protocol, SMTP), and an NFS protocol.

The computing circuit logic 101 can receive and parse the data access request according to the network protocol, and identify, from the data access request, a logical address of the data or the data (when the received data access request is used for requesting to write the data) carried in the data access request. The computing circuit logic 101 can further encapsulate and transmit, according to the network protocol, the data access response that needs to be fed back to the computing node 110.

The communication function is similar to a function of the "network interface card" mentioned above. In this embodiment of this application, the function of the "network interface card" is implemented by the computing circuit logic 101, and a network interface card or a network interface card in another form does not need to be independently deployed in the storage node 100.

### Function 2: Storage function

The storage node 100 is used as a node configured to store data in the storage system. The storage node 100 needs to carry some storage services, for example, data storage, data restoration, data backup, and data compression.

### (1) Data storage

The computing circuit logic 101 may manage storage space in the storage medium 103, and allocate a storage address to the data or determine a storage address of the data in the storage medium 103. The computing circuit logic 101 may access the storage medium 103, and write the data into or read the data from the storage medium 103. In this embodiment of this application, the storage address allocated by the computing circuit logic 101 to the data may be a physical address. The computing circuit logic 101 stores a mapping relationship between a logical address and a physical address, and the computing circuit logic 101 may allocate the physical address to the to-be-written data based on the mapping relationship and the logical address of the data. The computing circuit logic 101 may further determine a physical address of the to-be-read data based on the mapping relationship and the logical address of the data.

The logical address is oriented to the computing node 110 and identifies an address used for a storage location of the data. The logical address may be a logical block address (logical block address, LBA). The physical address is an actual address of the data stored in the storage medium 103, and the physical address may be a physical block address (physical block address, PBA).

In this embodiment of this application, the computing circuit logic 101 can identify the logical address, and implement translation between the logical address and the physical address. Subsequently, the computing circuit logic 101 accesses the storage medium 103 based on the physical address.

### (2) Data restoration

When storing the data, the computing circuit logic 101 stores the data by using a multi-copy mechanism, an erasure coding (erasure coding, EC) check mechanism, or a redundant array of independent disks (redundant array of independent disks, RAID) mechanism. The multi-copy mechanism means that at least two identical data copies are stored, and when one of the data copies is lost, another data copy can be used for restoration. The EC check mechanism means that the to-be-stored data is divided into at least two data fragments, parity data of the at least two data fragments is computed based on a specific check algorithm, and when one of the data fragments is lost, another data fragment and the parity data may be used for data restoration. For RAID, a plurality of independent hard disk drives (physical hard disk drives) are combined in different manners to form a hard disk drive group. The hard disk drive group can be presented as a logical hard disk drive. Common RAID levels include RAID 1, RAID 3, RAID 5, RAID 6, RAID 10 and RAID 50. A manner of storing the data by using the RAID mechanism varies with a RAID level. RAIDs of different levels can provide data reliability to some extent. For example, when the data is stored by using RAID 1, a data copy may be further stored. For another example, when the data is stored by using RAID 3, RAID 5, or RAID 6, parity data of the data may be generated and stored.

When the computing circuit logic 101 reads the data, if the computing circuit logic 101 finds that the to-be-read data is damaged, the computing circuit logic 101 may restore the damaged data by using the stored data copy or parity data.

### (3) Data backup

When storing the data, the computing circuit logic 101 backs up the data to generate a data copy.

### (4) Data reduction

The computing circuit logic 101 may encode the to-be-stored data or data that has been stored in the storage medium 103, to reduce storage space occupied by the data. A manner in which the computing circuit logic 101 implements the data reduction is not limited in embodiments of this application. For example, the computing circuit logic 101 may delete duplicate data from the data through data deduplication (data deduplication). For another example, the computing circuit logic 101 may compress the data by using a data compression algorithm.

### (5) Near-memory computing

A main function of the storage node 100 is data storage. However, in some actual application scenarios, the storage node 100 can assist the computing node 110 in performing a data computing operation. In the storage node 100, the data computing operation performed by the storage node 100 may be performed by the computing circuit logic 101. A specific type of the data computing operation is not limited in embodiments of this application. For example, the computing circuit logic 101 may search a data table for an entry, to find an entry that satisfies a condition. For another example, the computing circuit logic 101 may perform a counting operation to count entries that satisfy the condition in the data table.

It should be noted that only some possible types of the storage services are listed above. During specific application, a specific type of the storage service carried on the computing circuit logic 101 is not limited in embodiments of this application. The computing circuit logic 101 may carry a part or all of the foregoing storage services, and the computing circuit logic 101 may further carry storage services other than the foregoing storage services, for example, a data snapshot and active-active data.

### Function 3: General processing function

The computing circuit logic 101 has some general processing functions. For example, in addition to receiving the data access request, the computing circuit logic 101 further receives another request, for example, a request indicating to suspend operating, a request indicating to start operating, or a request indicating to migrate data. The computing circuit logic 101 may process the request. For another example, the computing circuit logic 101 may further access another storage node 100 in the storage node cluster 100, and the computing circuit logic 101 may generate a data access request for accessing the another storage node 100.

### Function 4: Management function

The computing circuit logic 101 can monitor performance of the storage node 100. For example, the computing circuit logic 101 may monitor a status, for example, memory usage, whether the memory is faulty, usage of a processor core in the computing circuit logic 101, whether the storage medium 103 is faulty, or the like, of each component in the storage node 100.

From a perspective of hardware, the computing circuit logic 101 includes a plurality of processor cores, and different processor cores may be configured to implement different functions of the computing circuit logic 101. Interaction between the processor cores is completed according to an on-chip bus protocol of the computing circuit logic 101. In comparison with interaction through a conventional bus, for example, interaction based on a peripheral component interconnect express (peripheral component interconnect express, PCIe) standard, efficiency of interaction inside the computing circuit logic 101 is higher, and a data storage process of the storage node 100 can be accelerated.

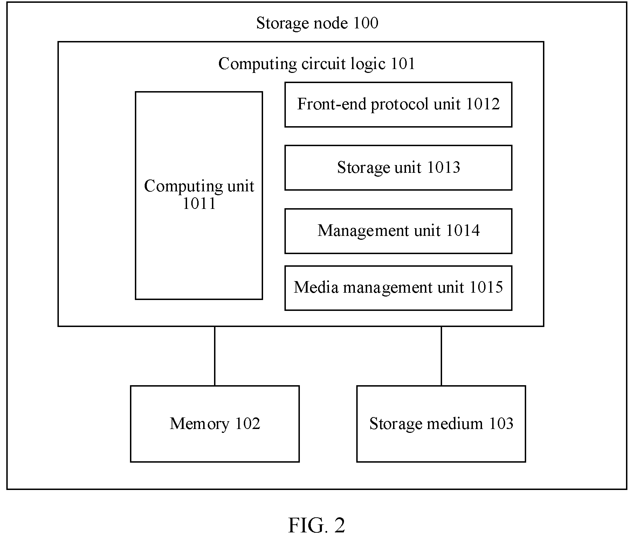

FIG. 2 is a diagram of a structure of a storage node 100 according to an embodiment of this application. From a logical perspective, a computing unit 1011, a front-end protocol unit 1012, a storage unit 1013, a management unit 1014, and a media management unit 1015 are deployed on computing circuit logic 101 in the storage node 100.

The computing unit 1011 is a main control unit in the computing circuit logic 101, and is configured to control the front-end protocol unit 1012, the storage unit 1013, the management unit 1014, and the media management unit 1015. For example, the computing unit 1011 may obtain a received data access request (for example, a first data write request or a first data read request mentioned in embodiments of this application) from the front-end protocol unit 1012, or indicate the front-end protocol unit 1012 to send a data access request (for example, a second data write request or a second data read request mentioned in embodiments of this application). For another example, the computing unit 1011 may indicate the storage unit 1013 to convert a logical address into a physical address, indicate the storage unit 1013 to allocate a physical address to a data copy, and indicate the storage unit 1013 to provide the physical address of the data copy. For another example, the computing unit 1011 may indicate the media management unit 1015 to read data from or write data into the physical address. For another example, the computing unit 1011 may indicate the management unit 1014 to report performance of the storage node 100.

The front-end protocol unit 1012 is configured to implement a communication function of the computing circuit logic 101, and is configured to interact with a computing node 110 or a storage node 100 other than the storage node 100. For example, in this embodiment of this application, the front-end protocol unit 1012 can receive a data access request from the computing node 110 or receive a data access request from the another storage node 100, and may further feed back a data access response to the computing node 110 or feed back a data access response to the another storage node 100.

The storage unit 1013 manages storage space in a storage medium 103, and determines occupied storage space and unoccupied storage space in the storage medium 103. The storage unit 1013 can implement translation between the logical address and the physical address. The storage unit 1013 may allocate a physical address to to-be-written data (for example, data carried in a data write request or a copy of the data). The storage unit 1013 may further determine a physical address of data that has been written into the storage medium 103. In addition, the storage unit 1013 may allocate, to data (for example, to-be-written data, a part of data in the to-be-written data, a data copy, or a part of data in the data copy) that needs to be stored in the another storage node 100, a logical address of the data in the another storage node 100.

The media management unit 1015 is directly oriented to the storage medium 103, and can access the storage medium 103 based on the physical address, and write data into or read data from the storage medium 103.

The management unit 1014 is configured to: implement a management function of the computing circuit logic 101, and manage the performance of the storage node 100.

In the computing circuit logic 101, the computing unit 1011, the front-end protocol unit 1012, the storage unit 1013, the management unit 1014, and the media management unit 1015 may communicate with each other according to an on-chip bus protocol. An on-chip bus is a connection line used inside a chip, and there is no specific standard limit for this type of on-chip bus. A bandwidth and a connection mode of the bus can be configured based on a design requirement of internal circuit logic.

A specific type of the on-chip bus is not limited in embodiments of this application. The on-chip bus protocol mentioned in embodiments of this application includes but is not limited to ARM cache coherence interconnect (advanced RISC machine cache coherent interconnect, ARM CCI), ARM cache coherency network (advanced RISC machine cache coherency network, ARM CCN), ARM coherent mesh network (advanced RISC machine coherent mesh network, ARM CMN), and ARM network interconnect (advanced RISC machine network interconnect, ARM NIC), where the RISC is reduced instruction set computer (reduced instruction set computer). In addition, these units may be connected through a communication channel between IP cores (intellectual property cores). Such communication channels are of many types, such as a control line and a data line.

These units may be connected through a same on-chip bus, or may be connected through different on-chip buses. For example, the computing unit 1011, the front-end protocol unit 1012, and the storage unit 1013 have a communication or computing function, and the units may be connected through a same on-chip bus, for example, the ARM CCI. The management unit 1014 and the media management unit 1015 mainly relate to management of the back-end storage medium 103. The two units may be connected through a same on-chip bus. One conversion bus is disposed between the two units to connect the two units.

It should be noted that, in this embodiment of this application, division into the units is an example, and is merely logical function division. In an actual implementation, another division manner may be used. Functional units in this embodiment of this application may be integrated into one processing module, each of the units may exist alone physically, or two or more units may be integrated into one module. The integrated module may be implemented in a form of hardware, or may be implemented in a form of a software functional module.

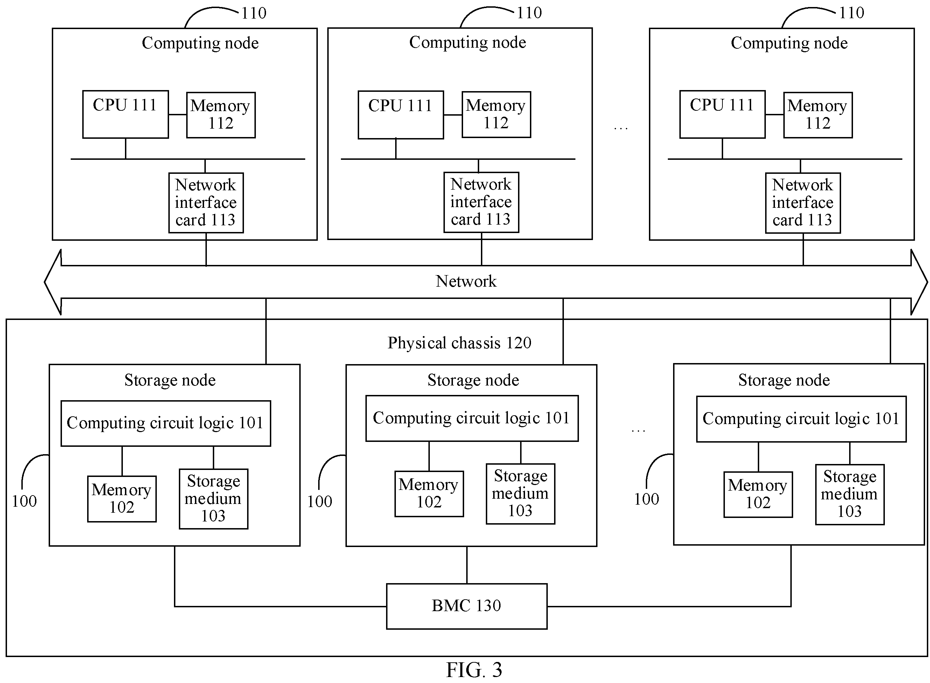

FIG. 3 is a diagram of a structure of a storage system according to an embodiment of this application. The storage system includes a computing node cluster and a storage node cluster. The computing node cluster includes a plurality of computing nodes 110, and the storage node cluster includes a plurality of storage nodes 100. For descriptions of the computing node cluster, the storage node cluster, the computing node 110, and the storage node 100, refer to the foregoing content. Details are not described herein again.

In the storage system, the storage node cluster further includes at least one physical chassis 120. For any physical chassis 120, one or more storage nodes 100 can be deployed in the physical chassis 120. In other words, the plurality of storage nodes 100 can be installed in one physical chassis 120.

A baseboard management controller (baseboard management controller, BMC) 130 is deployed on the physical chassis 120, and the BMC 130 can provide management functions such as device, security, energy efficiency, and reliability management for the storage node 100 installed on the physical chassis 120. That is, the BMC 130 can provide out-of-band management.

In this embodiment of this application, the out-of-band management means maintaining the storage node 100 through an independent management channel. The out-of-band management for the storage node 100 allows a system administrator to remotely monitor and manage the storage node 100. The out-of-band management for the storage node 100 mainly relates to management and monitoring of an operating environment of each component (for example, computing circuit logic 101, a memory, and a storage medium 103) in the storage node 100. The operating environment of the component includes but is not limited to information about the temperature, operating voltage, fan, power supply status, and the like, to ensure that the component in the storage node 100 can operate in an appropriate operating environment.

The baseboard management controller 130 may be connected to the storage node 100 installed on the physical chassis 120 through a management bus or a management interface. The management bus may be an inter-integrated circuit (Inter-Integrated Circuit, I2C) bus, or may be a serial peripheral interface (serial peripheral interface, SPI) bus. The management bus may alternatively be another type of bus, and the management interface is an interface dedicated to the out-of-band management.

The baseboard management controller 130 may obtain operating environment information of the storage node 100, for example, an operating temperature of the storage node 100, an operating status of a power supply that supplies power to the storage node 100, and a supply voltage of the power supply for the storage node 100, through the management bus or the management interface.

Externally, the physical chassis 120 may be connected to a device (for example, another physical chassis 120, storage node 100, or computing node 110) outside the physical chassis 120 through a cable.

The following describes a data access method provided in embodiments of this application with reference to FIG. 4. Refer to FIG. 3. The method includes three parts. A first part is an access process between the computing node 110 and the storage node 100. It is assumed that a data access request initiated by the computing node 110 is a first data access request, the computing circuit logic in the storage node 100 may receive the first data access request from the computing node 110, convert, into a physical address, a logical address that is of data and that is carried in the first data access request, and access a storage medium of the storage node 100 based on the physical address. This part includes two access manners. In one manner, the computing node 110 writes data into the storage node 100. For details, refer to step 401 to step 404. In this part, the first data access request is a first data write request. In the other manner, the computing node 110 reads data from the storage node 100. For details, refer to step 405 to step 408. In this part, the first data access request is a first data read request.

A second part is an access process between the storage nodes 100. It is assumed that a data access request initiated by a storage node 100A (computing circuit logic 101 in the storage node 110A) to a storage node 100B is a first data access request, the computing circuit logic in the storage node 100B may receive the first data access request from the storage node 100B, convert, into a physical address, a logical address that is of data and that is carried in the first data access request, and access a storage medium of the storage node 100B based on the physical address. This part includes two access manners. In one manner, the storage node 100A writes data into the storage node 100B. For details, refer to step 409 and step 410. In this part, the first data access request is a second data write request. In the other manner, the storage node 100B reads data from the storage node 100A. For details, refer to step 411 and step 412. In this part, the first data access request is a second data read request.

A third part is a process in which the computing node 110 requests the storage node 100 to complete data computing. For details, refer to step 413 to step 415. The three parts are independent of each other, and there is no strict execution sequence of the three parts. Herein, only for ease of description, the three processes are integrated into one embodiment. The following uses an example in which the storage node 100A writes the data based on a request of the computing node 110 to describe a data writing process.

Step 401: The computing circuit logic 101 in the storage node 100A receives the first data write request from the computing node 110, where the first data write request carries the data and the logical address of the data. This step may be performed by a front-end protocol unit 1012 in the computing circuit logic 101.

When the computing node 110 receives an external data access request, if the data access request is used for requesting to write the data, the computing node 110 may send the first data write request to the storage node 100A in the storage node 100A according to a network protocol.

In the storage node 100A, the front-end protocol unit 1012 in the computing circuit logic 101 receives the first data write request according to the network protocol. After receiving the first data write request, the front-end protocol unit 1012 may send the first data write request to a computing unit 1011 in the computing circuit logic 101 for processing. Step 402: The computing circuit logic 101 in the storage node 100A determines the physical address of the data based on the logical address that is of the data and that is carried in the first data write request. This step may be performed by the computing unit 1011 and a storage unit 1013 in the computing circuit logic 101 in cooperation.

For example, the logical address of the data is an LBA, and the physical address of the data is a PBA. In the computing circuit logic 101, a flash translation layer (flash translation layer, FTL) exists inside the storage unit 1013, and the FTL records a mapping relationship between the logical address and the physical address of the data that has been written into a storage medium 103. In other words, each time one piece of new data is written into the storage medium 103, the FTL records a logical address and a physical address of the new data.

After the computing unit 1011 obtains the first data write request from the front-end protocol unit 1012, the computing unit 1011 may obtain the LBA that is of the data and that is carried in the first data write request, send the LBA of the data to the storage unit 1013, and indicate the storage unit 1013 to provide the PBA that has the mapping relationship with the LBA of the data.

After receiving the LBA of the data, the storage unit 1013 allocates an unoccupied PBA to the LBA of the data, and records, in the FTL, the mapping relationship between the LBA of the data and the PBA. The storage unit 1013 provides the PBA for the computing unit 1011.

It should be noted that, when the computing circuit logic 101 stores the data by using a multi-copy mechanism, the storage unit 1013 may allocate a plurality of unoccupied PBAs to the LBA of the data, where each PBA is used for storing one copy of the data. There is a mapping relationship between each of the plurality of PBAs and the LBA of the data. When the computing circuit logic 101 stores the data by using an EC mechanism, the PBA allocated by the storage unit 1013 to the LBA of the data includes the PBA of the data and a PBA of parity data. Subsequently, when the medium storage unit 1013 stores the data, the data and the parity data of the data are written into the corresponding PBA. Similarly, when the computing circuit logic 101 stores the data by using a RAID mechanism, in addition to the PBA of the data, the PBA allocated by the storage unit 1013 to the LBA of the data further includes a PBA of a data copy or the PBA of the parity data. Subsequently, when the medium storage unit 1013 stores the data, the data and the parity data or the data copy of the data are written into the corresponding PBA.

Step 403: The computing circuit logic 101 in the storage node 100A accesses the storage medium 103, and writes the data carried in the first data write request into the physical address of the data. This step may be performed by the computing unit 1011 and a media management unit 1015 in the computing circuit logic 101 in cooperation.

In the computing circuit logic 101, after receiving the PBA of the data, the computing unit 1011 generates a write instruction, where the write instruction indicates to write the data into the PBA of the data. The computing unit 1011 sends the write instruction to the media management unit 1015.

After receiving the write instruction, the media management unit 1015 determines a location to which the PBA of the data in the storage medium 103 points, and writes the data into the location. The media management unit 1015 may control a voltage of a component (for example, a transistor) at the location to which the PBA of the data in the storage medium 103 points, to complete data writing.

It should be noted that, when the computing circuit logic 101 stores the data by using the multi-copy mechanism, the write instruction generated by the computing unit 1011 carries the plurality of PBAs to which the LBA of the data is mapped, and the media management unit 1015 needs to write one data copy of the data into each PBA. When the computing circuit logic 101 stores the data by using the EC mechanism, the computing unit 1011 may generate the parity data of the data based on the data, and the computing unit 1011 transmits the data and the parity data of the data to the media management unit 1015 by using the write instruction, and indicates the media management unit 1015 to write the data and the parity data of the data into the corresponding PBA. After receiving the write instruction, the media management unit 1015 writes the data into the PBA of the data, and writes the parity data of the data into the PBA of the parity data. Similarly, when the computing circuit logic 101 stores the data by using the RAID mechanism, the computing unit 1011 may generate the parity data or the data copy of the data based on the data, and the computing unit 1011 transmits the data and the parity data (or the data copy) of the data to the media management unit 1015 by using the write instruction. After receiving the write instruction, the media management unit 1015 writes the data and the parity data of the data into the PBA of the data and the PBA of the parity data respectively, or writes the data and the data copy into the PBA of the data and the PBA of the data copy respectively.

In the foregoing descriptions, an example in which when the computing circuit logic 101 stores the data by using the multi-copy mechanism, the EC mechanism, or the RAID mechanism, the generated data copy and parity data are stored in the storage medium 103 of the storage node 100 is used. This is only one of possible data writing manners. During actual application, a part or all of the data, the data copy, and the parity data may alternatively be stored in a storage node 100 other than the storage node 100. For example, for any data copy, the data copy may be stored in one or more storage nodes 100 other than the storage node 100. For another example, for the data, a part of the data may be locally stored, and a remaining part of the data may be stored in the one or more storage nodes 100 other than the storage node 100. For another example, the parity data may be stored in the one or more storage nodes 100 other than the storage node 100.

A scenario in which the computing unit 1011 generates the data copy when the storage node 100A stores the data is used as an example. The computing unit 1011 cooperates with the storage unit 1013 to determine a specific storage location to which the data and the data copy are allocated, and first data that needs to be stored locally and second data that needs to be stored in another storage node 100 (for example, a storage node 100C) are determined from the data and the data copy. For the first data, the storage unit 1013 may allocate a physical address of the first data to the first data. The computing unit 1011 obtains the physical address of the first data from the storage unit 1013, and transmits the first data and the physical address of the first data to the media management unit 1015 by using the write instruction. The media management unit 1015 may write the first data into the storage medium 103 based on the write instruction. For a specific writing manner, refer to the foregoing content. Details are not described herein again.

For the second data, the computing unit 1011 or the storage unit 1013 may allocate, to the second data, a logical address of the second data on the another storage node 100. If the computing unit 1011 allocates, to the second data, the logical address of the second data on the another storage node 100, the computing unit 1011 may transmit, to the storage unit 1013, the logical address of the second data on the another storage node 100, so that the storage unit 1013 records the logical address of the second data on the another storage node 100. In this way, when the computing unit 1011 needs to read the second data, the storage unit 1013 may notify the computing unit 1011 of the logical address of the second data on the another storage node 100, and the computing unit 1011 may initiate a third data access request carrying the logical address to the another storage node 100, to obtain the second data. If the storage unit 1013 allocates, to the second data, the logical address of the second data on the another storage node 100, the computing unit 1011 obtains, from the storage unit 1013, the logical address of the second data on the another storage node 100. After determining the logical address of the second data on the another storage node 100, the computing unit 1011 generates a second data access request that carries the logical address, and sends the second data access request to the another storage node 100 through the front-end protocol unit 1012, to request to write the second data into the another storage node 100. A manner of interaction between the storage node 100 and the another storage node 100 may be similar to a manner described in step 409 to step 412 in this embodiment. For details, refer to related content below. Details are not described herein.

The first data or the second data is not necessarily the data copy or the data carried in the first data write request, and the first data or the second data may include a part of data in the data copy or a part of the data carried in the first data write request.

Step 404: The computing circuit logic 101 in the storage node 100A feeds back a first data write acknowledgment to the computing node 110, where the first data write acknowledgment indicates that the data is successfully written. This step may be performed by the front-end protocol unit 1012 in the computing circuit logic 101. (Step 404 and step 403 are not subject to sequence dependency in a write-back state, and this is merely used for ease for giving an example.) The write-back state means that the data is first written into a memory 102, the computing node 110 is notified that the data is successfully written, and then the data is written into the storage medium 103.

In the computing circuit logic 101, after writing the data into the PBA of the data, the media management unit 1015 may notify the computing unit 1011 that the data has been written. After receiving a notification from the media management unit 1015, the computing unit 1011 generates the first data write acknowledgment, and indicates the front-end protocol unit 1012 to send the first data write acknowledgment to the computing node 110.

In the computing circuit logic 101, if the media management unit 1015 fails to write the data into the PBA of the data (for example, the storage medium 103 is faulty), the media management unit 1015 notifies the computing unit 1011 that the data fails to be written. The computing unit 1011 may re-indicate the storage unit 1013 to re-allocate a physical address to the data, and the computing unit 1011 may re-generate a write instruction, to indicate the media management unit 1015 to write the data into the newly allocated physical address. The media management unit 1015 writes the data into the newly allocated physical address. The computing unit 1011 may repeatedly perform the foregoing operations until the data is successfully written.

Alternatively, the computing unit 1011 may generate a first data write negative acknowledgment when the data fails to be written or a quantity of data writing failures is greater than a quantity threshold. The first data write acknowledgment indicates that the data fails to be written, and indicates the front-end protocol unit 1012 to send the first data write negative acknowledgment to the computing node 110.

Step 401 to step 404 are a process in which the storage node 100A processes the first data write request from the computing node 110 to implement data writing. In this process, all operations performed by the storage node 100A are processed by the computing circuit logic 101, and a process of bus-based interaction between a processor, a network interface card, and a hard disk drive is no longer involved, so that duration of transmission of internal information of the storage node 100A can be reduced, and data write efficiency can be improved.

The following uses a process in which the computing node 110 reads the data as an example to describe a process in which the storage node 100A reads the data. For details, refer to step 405 to step 408.

Step 405: The computing circuit logic 101 in the storage node 100A receives the first data read request from the computing node 110, where the first data read request carries a logical address of data. This step may be performed by the front-end protocol unit 1012 in the computing circuit logic 101.

When the computing node 110 receives an external data access request, if the data access request is used for requesting to read the data, the computing node 110 may send the first data read request to the storage node 100A in a storage node 100A cluster according to the network protocol.

In the storage node 100A, the front-end protocol unit 1012 in the computing circuit logic 101 receives the first data read request according to the network protocol. After receiving the first data read request, the front-end protocol unit 1012 may send the first read data to the computing unit 1011 in the computing circuit logic 101 for processing.

Step 406: The computing circuit logic 101 in the storage node 100A determines a physical address of the data based on the logical address that is of the data and that is carried in the data read request. This step may be performed by the computing unit 1011 and the storage unit 1013 in the computing circuit logic 101 in cooperation.

Still using the example in which the logical address of the data is the LBA and the physical address of the data is the PBA, in the computing circuit logic 101, there is an FTL inside the storage unit 1013.

After the computing unit 1011 obtains the first data read request from the front-end protocol unit 1012, the computing unit 1011 may obtain an LBA that is of the data and that is carried in the first data read request, send the LBA of the data to the storage unit 1013, and indicate the storage unit 1013 to provide a PBA that has a mapping relationship with the LBA of the data.

After receiving the LBA of the data, the storage unit 1013 queries the FTL to determine the PBA of the data. The storage unit 1013 provides the PBA for the computing unit 1011.

Step 407: The computing circuit logic 101 accesses the storage medium 103, and reads the data from the physical address of the data. This step may be performed by the computing unit 1011 and the media management unit 1015 in the computing circuit logic 101 in cooperation.

In the computing circuit logic 101, after receiving the PBA of the data, the computing unit 1011 generates a read instruction, where the read instruction indicates to read the data from the PBA of the data. The computing unit 1011 sends the read instruction to the media management unit 1015.

After receiving the read instruction, the media management unit 1015 determines a location to which the PBA of the data in the storage medium 103 points, and reads the data from the location. The media management unit 1015 may detect a voltage of a component (for example, a transistor) at the location to which the PBA of the data in the storage medium 103 points, to complete data reading.

It is assumed that the storage node 100 stores the data by using the multi-copy mechanism, the EC mechanism, or the RAID mechanism. For example, when the media management unit 1015 writes the data, a data copy or parity data is also written. When the media management unit 1015 writes the data and the data copy is also written into the local storage medium 103, if the media management unit 1015 fails to read the data from the location to which the physical address of the data points, for example, the data is abnormal or the storage medium 103 is faulty, the media management unit 1015 may notify the computing unit 1011 that the data fails to be read; the computing unit 1011 may indicate the storage unit 1013 to provide a physical address of the data copy, and the computing unit 1011 may re-generate a read instruction, to indicate the media management unit 1015 to write the data into the physical address of the data copy; the media management unit 1015 reads the data from the physical address of the data copy; and the computing unit 1011 may repeatedly perform the foregoing operations until the data is successfully read.

When the media management unit 1015 writes the data and the parity data is also written, after the media management unit 1015 successfully reads the data from the location to which the physical address of the data points, the computing unit 1011 may first check the parity data. If the check succeeds, the read succeeds. If the check fails, an error occurs in the data, and error correction may be performed on the data by using the parity data. If the error correction succeeds, data obtained through the error correction is correct data. If the error correction fails, the reading fails. In this case, if the storage node 100 not only uses the EC mechanism to store the data, but also uses the multi-copy mechanism to store the data, for example, when writing the data, the storage node 100 further writes the data copy into the local storage medium 103, the media management unit 1015 may notify the computing unit 1011 that the data fails to be read. The computing unit 1011 may indicate the storage unit 1013 to provide the physical address of the data copy, and the computing unit 1011 may re-generate a read instruction, to indicate the media management unit 1015 to write the data into the physical address of the data copy. The media management unit 1015 reads the data from the physical address of the data copy. The computing unit 1011 may repeatedly perform the foregoing operations until the data is successfully read.

In the foregoing descriptions, an example in which when the computing circuit logic 101 stores the data by using the multi-copy mechanism, the EC mechanism, or the RAID mechanism, the generated data copy and parity data are stored in the storage medium 103 (namely, the local storage medium 103) of the storage node 100 is used for description. During actual application, a part or all of the data, the data copy, and the parity data may alternatively be stored in a storage node 100 other than the storage node 100.

If the storage node 100 uses the multi-copy mechanism to store the data, and the data copy is distributed on another storage node 100 or a part of data in the data copy is distributed on the another storage node 100, when the media management unit 1015 fails to read the data from the location to which the physical address of the data points, the media management unit 1015 may notify the computing unit 1011 that the data fails to be read. The computing unit 1011 may indicate the storage unit 1013 to provide a logical address that is of the data copy of the data and that is on the another storage node 100 (or a logical address that is of the part of data in the data copy of the data and that is on the another storage node 100). The computing unit 1011 may generate a third data access request that carries the logical address, where the third data access request is used for requesting to read the data copy from the another storage node 100. The computing unit 1011 indicates the front-end protocol unit 1012 to send the third data access request to the another storage node 100. A manner of interaction between the storage node 100 and the another storage node 100 may be similar to a manner described in step 409 to step 412 in this embodiment. For details, refer to related content below. Details are not described herein.

Step 408: The computing circuit logic 101 in the storage node 100A feeds back a first data read acknowledgment to the computing node 110, where the first data read acknowledgment carries the data.

In the computing circuit logic 101, after reading the data from the PBA of the data, the media management unit 1015 may transmit the data to the computing unit 1011. After receiving the data transmitted by the media management unit 1015, the computing unit 1011 generates the first data read acknowledgment, and indicates the front-end protocol unit 1012 to send the first data read acknowledgment to the computing node 110.

Alternatively, the computing unit 1011 may generate a first data read negative acknowledgment when the data fails to be read or a quantity of data reading failures reaches a threshold. The first data read acknowledgment indicates that the data fails to be read, and indicates the front-end protocol unit 1012 to send the first data read negative acknowledgment to the computing node 110.

Step 405 to step 408 are a process in which the storage node 100A processes the first data read request from the computing node 110 to implement data reading. Similar to the data writing process, in this process, all operations performed by the storage node 100A are processed by the computing circuit logic 101, and a process of bus-based interaction between the processor, the network interface card, and the hard disk drive is no longer involved, so that duration of transmission of internal information of the storage node 100A can be reduced, and data read efficiency can be improved.

Because there are a plurality of storage nodes 100 in the storage node cluster 100, in this embodiment of this application, the storage nodes 100 are allowed to interact with each other inside the storage node cluster 100, to access data stored in each other. Interaction between the storage nodes 100 for access of the data stored in each other is also divided into a data writing process and a data reading process. The following uses a process of interaction between the storage node 100A and the storage node 100B as an example for description. For details, refer to step 409 to step 412.

Step 409: The computing circuit logic 101 in the storage node 100A sends the second data write request to the storage node 100B, where the second data write request carries data and a logical address of the data. This step may be performed by the front-end protocol unit 1012 in the computing circuit logic 101 in the storage node 100A.

A specific scenario in which the storage node 100A accesses the storage node 100B and writes the data into the storage node 100B is not limited in embodiments of this application. For example, when the storage node 100A does not have sufficient free storage space in the storage medium 103 of the storage node 100A to support data writing, the storage node 100A may access the storage node 100B, and write the to-be-written data into the storage node 100B. For another example, to ensure security of data in the storage node 100A, the storage node 100A may back up the data in the storage medium 103 of the storage node 100A. The storage node 100A may access the storage node 100B, and write the backup data into the storage node 100B. In other words, the storage node 100B stores a data copy of the data. For another example, when a loss occurs on the storage medium 103 of the storage node 100A or the storage node 100A needs to suspend operating, and the data in the storage medium 103 of the storage node 100A needs to be migrated to another storage node 100, the storage node 100A may access the storage node 100B, and write the data in the storage medium 103 of the storage node 100A into the storage node 100B.

Step 410: The storage node 100B processes the second data write request, and writes the data into the logical address of the data. A process in which the storage node 100B processes the second data write request is similar to a process in which the storage node 100A processes the first data write request, and a difference lies in that: In the process in which the storage node 100A processes the first data write request, the storage node 100A needs to interact with the computing node 110, and feed back the first data write acknowledgment or the first data write negative acknowledgment; and in the process in which the storage node 100B processes the second data write request, the storage node 100B needs to interact with the storage node 100A, and feed back a response to the second data write request, to notify the storage node 100A that the data is successfully written or fails to be written. For details, refer to steps 402 to 304, and details are not described herein again.

Step 411: The computing circuit logic 101 in the storage node 100A sends the second data read request to the storage node 100B, where the second data read request carries a logical address of data. This step may be performed by the front-end protocol unit 1012 in the computing circuit logic 101 in the storage node 100A.

A specific scenario in which the storage node 100A accesses the storage node 100B and reads the data from the storage node 100B is not limited in embodiments of this application. For example, when the storage node 100A needs to read data that is previously stored in the storage node 100B when local storage space is insufficient, the storage node 100A may access the storage node 100B, and read the data from the storage node 100B. For another example, when the storage node 100A needs to obtain a copy of data previously stored in the storage node 100B to restore locally stored data, the storage node 100A may access the storage node 100B, and read the data copy from the storage node 100B. For another example, when the storage node 100A receives a request from the computing device, where the request is used for requesting to migrate data from the storage node 100B, the storage node 100A may access the storage node 100B to obtain the data stored in the storage node 100B.

Step 412: The storage node 100B processes the second data read request, reads the data from the logical address of the data, and feeds back the read data to the storage node 100A. A process in which the storage node 100B processes the second data read request is similar to a process in which the storage node 100A processes the first data read request, and a difference lies in that: In the process in which the storage node 100A processes the first data read request, the storage node 100A needs to interact with the computing node 110, and feed back the first data read acknowledgment or the first data read negative acknowledgment; and in the process in which the storage node 100B processes the second data read request, the storage node 100B needs to interact with the storage node 100A, and feed back a response to the second data read request, to send the read data to the storage node 100A or notify the storage node 100A that the data fails to be read. For details, refer to steps 405 to 308, and details are not described herein again.

In this embodiment of this application, the storage node 100 further has a function of near-memory computing, and can assist the computing node 110 in completing some simple data computing tasks. The following describes a process in which the storage node 100 implements the near-memory computing.

Step 413: The storage node 100A receives a data computing request from the computing node 110, where the data computing request is used for computing data in the storage node 100. The data computing request carries a logical address of the to-be-computed data and computing indication information, where the computing indication information indicates a computing manner of the to-be-computed data. This step may be performed by the front-end protocol unit 1012 in the computing circuit logic 101.

For example, the computing node 110 needs to find, from a data table, an entry that satisfies a target condition. The data computing request may carry a logical address of the data table and the target condition, and the target condition is the computing indication information.

For another example, the computing node 110 needs to determine, from a data table, a quantity of entries that satisfy a target condition. The data computing request may carry a logical address of the data table and computing indication information, where the computing indication information indicates to count the entries that satisfy the target condition in the data table.

Step 414: The computing circuit logic 101 in the storage node 100A determines a physical address of the data based on the logical address that is of the data and that is carried in the data computing request. This step may be performed by the computing unit 1011 and the storage unit 1013 in the computing circuit logic 101 in cooperation. A manner in which the computing circuit logic 101 in the storage node 100A performs step 414 is similar to a manner in which step 406 is performed. For details, refer to the foregoing content. Details are not described herein again.

Step 415: The computing circuit logic 101 in the storage node 100A accesses the storage medium 103, and reads the data from the physical address of the data. This step may be performed by the computing unit 1011 and the media management unit 1015 in the computing circuit logic 101 in cooperation. A manner in which the computing circuit logic 101 in the storage node 100A performs step 415 is similar to a manner in which step 407 is performed. For details, refer to the foregoing content. Details are not described herein again.

It should be noted that, when the computing circuit logic 101 fails to read the data from the physical address of the data, the computing circuit logic 101 may obtain a data copy. For a manner in which the computing circuit logic 101 obtains the data copy, refer to the foregoing content. Details are not described herein again.

Step 416: The computing circuit logic 101 in the storage node 100A computes the read data based on the data computing request, to obtain a computing result. This step may be performed by the computing unit 1011 in the computing circuit logic 101.

After reading the to-be-computed data, the computing circuit logic 101 may compute the data in the computing manner indicated by the computing indication information, to obtain the computing result.

For example, when the computing indication information indicates that the entry that satisfies the target condition is found from the data table, the computing circuit logic 101 may search the data table for the entry based on the target condition, to obtain the entry that satisfies the target condition.

For another example, when the computing indication information indicates to determine the quantity of entries that satisfy the target condition in the data table, the computing circuit logic 101 may search the data table for the entry based on the target condition. Each time one entry that satisfies the target condition is found, a count value is increased by 1. Finally, after the search is complete, a value of the count value is the computing result.

Inside the computing circuit logic 101, after obtaining the data from the media management unit 1015, the computing unit 1011 may compute the data in the computing manner indicated by the computing indication information, to obtain the computing result.

Step 417: The computing circuit logic 101 in the storage node 100A feeds back a data computing response to the computing node 110, where the data computing response carries the computing result. This step may be performed by the front-end protocol unit 1012 in the computing circuit logic 101.

The descriptions of procedures corresponding to the foregoing accompanying drawings have respective focuses. For a part of a procedure that is not described in detail, refer to related descriptions of another procedure.

All or a part of the foregoing embodiments may be implemented by using software, hardware, firmware, or any combination thereof. When software is used to implement embodiments, all or a part of embodiments may be implemented in a form of a computer program product. The computer program product includes computer program instructions. When the computer program instructions are loaded and executed on a computer, all or a part of procedures or functions in FIG. 3 in embodiments of the present invention are generated.

The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

It is clear that a person skilled in the art can make various modifications and variations to this application without departing from the scope of this application. In this way, this application is intended to cover these modifications and variations of this application provided that they fall within the scope of the claims of this application and their equivalent technologies.

## Claims

1. A storage system, wherein the storage system comprises at least one computing node and a plurality of storage nodes, and for a first storage node in the plurality of storage nodes, the first storage node comprises computing circuit logic and a storage medium;
the computing circuit logic is configured to: receive a first data access request from the at least one computing node and/or a second storage node in the plurality of storage nodes according to a network protocol, wherein the first data access request is used for accessing data in the first storage node; and determine a physical address of the to-be-accessed data based on a logical address that is of the data and that is carried in the first data access request, and access the storage medium based on the physical address of the data.

2. The system according to claim 1, wherein the computing circuit logic comprises a front-end protocol unit, a computing unit, a storage unit, and a media management unit, and the front-end protocol unit, the computing unit, the storage unit, and the media management unit communicate with each other according to an on-chip bus protocol;
the front-end protocol unit is configured to receive the first data access request according to the network protocol;
the storage unit is configured to determine the physical address of the data based on the logical address of the data;
the computing unit is configured to: obtain the physical address of the data from the storage unit, and indicate the media management unit to access the storage medium based on the physical address of the data; and
the media management unit is configured to access the storage medium based on the physical address of the data and based on an indication of the computing unit.

3. The system according to claim 2, wherein the first data access request is used for requesting to write the data into the storage medium;
the computing unit is further configured to: generate parity data of the data based on the data; and obtain a physical address of the parity data from the storage unit, and indicate the media management unit to store the parity data based on the physical address of the parity data;
the storage unit is further configured to allocate the physical address to the parity data; and
the media management unit is configured to: store the data based on the physical address of the data and based on an indication of the computing unit, and store the parity data in the storage medium based on the physical address of the parity data.

4. The system according to claim 1 or 2, wherein the first data access request is used for requesting to write the data into the storage medium;
the storage unit is further configured to determine a logical address of the data copy based on the logical address of the data, wherein the logical address of the data copy is in a third storage node in the plurality of storage nodes;
the computing unit is further configured to: obtain the logical address of the data copy from the storage unit, and generate the second data access request, wherein the second data access request is used for writing the data copy into the third storage node, and the second data access request carries the logical address of the data copy; and
the front-end protocol unit is further configured to send the second data access request to the third storage node.

5. The system according to any one of claims 1 to 4, wherein the first data access request is used for requesting to write the data into the storage medium;
the storage unit is further configured to determine a physical address of the data copy based on the logical address of the data;
the computing unit is further configured to: obtain the physical address of the data copy from the storage unit, and indicate the media management unit to store the data copy based on the physical address of the data copy; and
the media management unit is configured to: store the data based on the physical address of the data and based on an indication of the computing unit, and store the data copy in the storage medium based on the physical address of the data copy.

6. The system according to claim 3, wherein the first data access request is used for requesting to read the data from the storage medium;
the computing unit is further configured to: obtain the physical address of the parity data from the storage unit, and indicate the media management unit to read the parity data based on the physical address of the parity data;
the media management unit is configured to:
read the data and the parity data of the data from the storage medium based on the physical address of the data and the physical address of the parity data;
the computing unit is configured to: perform data restoration on the data based on the parity data, and generate a first data access response, wherein the first data access response carries data obtained through the data restoration; and
the front-end protocol unit is configured to send the first data access response to the at least one computing node and/or the second storage node.

7. The system according to claim 4, wherein the first data access request is used for requesting to read the data from the storage medium;
the computing unit is further configured to: after determining that the media management unit fails to read the data from the storage medium, obtain the logical address of the data copy from the storage unit; and generate the third data access request, wherein the third data access request is used for reading the data copy from the third storage node in the plurality of storage nodes, and the third data access request carries the logical address of the data copy;
the front-end protocol unit is further configured to: send the third data access request to the third storage node, and receive the data copy fed back by the third storage node;
the computing unit is further configured to generate a first data access response, wherein the first data access response carries the data copy; and
the front-end protocol unit is configured to send the first data access response to the at least one computing node and/or the second storage node.

8. The system according to any one of claims 1 to 6, wherein
the computing circuit logic is further configured to: receive a data computing request from the at least one computing node according to the network protocol, wherein the data computing request is used for computing data in the storage node; read the data in the storage medium based on the data computing request; and compute the read data.

9. The system according to any one of claims 1 to 8, wherein the storage medium is a flash chip or a magnetic disk.

10. The system according to any one of claims 1 to 9, wherein the network protocol comprises a part or all of the following: a transmission control protocol/internet protocol TCP/IP, a user datagram protocol UDP, a hypertext transfer protocol HTTP, a file transfer protocol FTP, a remote terminal Telnet protocol, and a network file system NFS protocol.

11. A data access method, wherein the method is applied to a storage system comprising at least one computing node and a plurality of storage nodes, and the method comprises:
sending, by the at least one computing node and/or a second storage node in the plurality of storage nodes, a first data access request to a first storage node in the plurality of storage nodes, wherein the first data access request is used for accessing data in the first storage node; and
receiving, by computing circuit logic in the first storage node, the first data access request according to a network protocol, determining a physical address of the to-be-accessed data based on a logical address that is of the data and that is carried in the first data access request, and accessing a storage medium of the first storage node based on the physical address of the data.

12. The method according to claim 11, wherein the computing circuit logic comprises a front-end protocol unit, a computing unit, a storage unit, and a media management unit, and the front-end protocol unit, the computing unit, the storage unit, and the media management unit communicate with each other according to an on-chip bus protocol; and the determining, by computing circuit logic, a physical address of the to-be-accessed data based on a logical address that is of the data and that is carried in the first data access request, and accessing a storage medium of the first storage node based on the physical address of the data comprises:
receiving, by the front-end protocol unit, the first data access request according to the network protocol;
determining, by the storage unit, the physical address of the data based on the logical address of the data;
obtaining, by the computing unit, the physical address of the data from the storage unit, and indicating the media management unit to access the storage medium based on the physical address of the data; and
accessing, by the media management unit, the storage medium based on the physical address of the data and based on an indication of the computing unit.

13. The method according to claim 12, wherein the first data access request is used for requesting to write the data into the storage medium; and the determining, by computing circuit logic, a physical address of the to-be-accessed data based on a logical address that is of the data and that is carried in the first data access request, and accessing a storage medium of the first storage node based on the physical address of the data comprises:
generating, by the computing unit, parity data of the data based on the data;
determining, by the storage unit, the physical address of the data based on the logical address of the data, and allocating a physical address to the parity data;
obtaining, by the computing unit, the physical address of the data and the physical address of the parity data from the storage unit, and indicating the media management unit to store the data and the parity data based on the physical address of the data and the physical address of the parity data; and
storing, by the media management unit, the data based on the physical address of the data and based on an indication of the computing unit, and storing the parity data in the storage medium based on the physical address of the parity data.

14. The method according to claim 11 or 12, wherein the first data access request is used for requesting to write the data into the storage medium; and the determining, by computing circuit logic, a physical address of the to-be-accessed data based on a logical address that is of the data and that is carried in the first data access request, and accessing a storage medium of the first storage node based on the physical address of the data comprises:
generating, by the computing unit, the data copy based on the data;
determining, by the storage unit, the physical address of the data based on the logical address of the data, and allocating a logical address to the data copy of the data;
obtaining, by the computing unit, the physical address of the data and a physical address of the data copy from the storage unit, indicating the media management unit to store the data and the parity data based on the physical address of the data, and generating the second data access request, wherein the second data access request is used for writing the data copy into the third storage node, and the second data access request carries the logical address of the data copy;
sending, by the front-end protocol unit, the second data access request to the third storage node; and
storing, by the media management unit, the data based on the physical address of the data and based on an indication of the computing unit.

15. The method according to any one of claims 11 to 14, wherein the first data access request is used for requesting to write the data into the storage medium; and the determining, by computing circuit logic, a physical address of the to-be-accessed data based on a logical address that is of the data and that is carried in the first data access request, and accessing a storage medium of the first storage node based on the physical address of the data comprises:
generating, by the computing unit, the data copy based on the data;
determining, by the storage unit, the physical address of the data and the physical address of the data copy based on the logical address of the data;
obtaining, by the computing unit, the physical address of the data and the physical address of the data copy from the storage unit, and indicating the media management unit to store the data and the data copy based on the physical address of the data and the physical address of the data copy; and
storing, by the media management unit, the data based on the physical address of the data and based on an indication of the computing unit, and storing the data copy in the storage medium based on the physical address of the data copy.

16. The method according to claim 13, wherein the first data access request is used for requesting to read the data from the storage medium; and the determining, by computing circuit logic, a physical address of the to-be-accessed data based on a logical address that is of the data and that is carried in the first data access request, and accessing a storage medium of the first storage node based on the physical address of the data comprises:
obtaining, by the computing unit, the physical address of the data and the physical address of the parity data from the storage unit, and indicating the media management unit to read the data and the parity data based on the physical address of the data and the physical address of the parity data;
reading, by the media management unit, the data and the parity data from the storage medium based on the physical address of the data and the physical address of the parity data;
performing, by the computing unit, data restoration on the data based on the parity data, and generating a first data access response, wherein the first data access response carries the data obtained through the data restoration; and
sending, by the front-end protocol unit, the first data access response to the at least one computing node and/or the second storage node.

17. The method according to claim 14, wherein the first data access request is used for requesting to read the data from the storage medium, and the method further comprises:
after determining that the media management unit fails to read the data from the storage medium, obtaining, by the computing unit, the logical address of the data copy from the storage unit; and generating the third data access request, wherein the third data access request is used for reading the data copy from the third storage node in the plurality of storage nodes, and the third data access request carries the logical address of the data copy;
sending, by the front-end protocol unit, the third data access request to the another storage node, and receiving the data copy fed back by the third storage node;
generating, by the computing unit, a first data access response, wherein the first data access response carries the data copy; and
sending, by the front-end protocol unit, the first data access response to the at least one computing node and/or the second storage node.

18. The method according to any one of claims 11 to 16, wherein the method further comprises:
receiving, by the computing circuit logic, a data computing request from the at least one computing node according to the network protocol, wherein the data computing request is used for computing data in the storage node; reading the data in the storage medium based on the data computing request; and computing the read data.

19. The method according to any one of claims 11 to 18, wherein the storage medium is a flash chip or a magnetic disk.

20. The method according to any one of claims 11 to 19, wherein the network protocol comprises a part or all of the following: a TCP/IP, a UDP, an HTTP, an FTP, a Telnet protocol, and an NFS protocol.

21. A storage subsystem, wherein the storage subsystem comprises computing circuit logic and a storage medium, the storage medium is configured to store data, and the computing circuit logic is configured to perform the method according to any one of claims 11 to 20.

22. A computer-readable storage medium, wherein when the computer-readable storage medium is executed by a computing device, the computing device performs the method according to any one of claims 11 to 20.
